(19) **Europäisches Patentamt / European Patent Office / Office européen des brevets**

(11) **EP 4 336 409 A1**

(12) **EUROPEAN PATENT APPLICATION**

(43) Date of publication:
**13.03.2024  Bulletin 2024/11**

(51) International Patent Classification (IPC):
**G06N 3/0464** (2023.01)    **G06N 3/063** (2023.01)

(21) Application number: **22195142.9**

(52) Cooperative Patent Classification (CPC):
**G06N 3/0464;** G06N 3/048; G06N 3/063

(22) Date of filing: **12.09.2022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **STMicroelectronics S.r.l.**
  **20864 Agrate Brianza (MB) (IT)**
• **STMicroelectronics International N.V.**
  **1228 Plan-les-Ouates, Geneva (CH)**

(72) Inventors:
• **DESOLI, Giuseppe**
  **I-22042 San Fermo Della Battaglia (Como) (IT)**
• **SINGH, Surinder Pal**
  **201301 Noida (IN)**
• **BOESCH, Thomas**
  **6821 Rovio (CH)**

(74) Representative: **Bosotti, Luciano**
**Buzzi, Notaro & Antonielli d'Oulx S.p.A.**
**Corso Vittorio Emanuele II, 6**
**10123 Torino (IT)**

(54) **NEURAL NETWORK HARDWARE ACCELERATOR CIRCUIT WITH REQUANTIZATION CIRCUITS**

(57)    A convolutional neural network (101) includes convolution circuitry (106). The convolution circuitry (106) performs convolution operations on input tensor values. The convolutional neural network (101) includes requantization circuitry (112) that requantizes convolution values output from the convolution circuitry (106).

FIG. 1

EP 4 336 409 A1

**Description**

**BACKGROUND**

Technical Field

The present disclosure generally relates to convolutional neural networks, CNNs implemented in sensor systems.

Description of the Related Art

Deep learning algorithms promote very high performance in numerous applications involving recognition, identification and/or classification tasks, however, such advancements may come at the price of significant usage of processing power. Thus, their adoption can be hindered by a lack of availability of low-cost and energy-efficient solutions. Accordingly, severe performance specifications may coexist with tight constraints in terms of power and energy consumption while deploying deep learning applications on embedded devices.

BRIEF SUMMARY

As used herein, the designation neural network is held to imply the use of technical means and may thus take the form of, e.g.: a computer-implemented method, namely a method carried out by a computer, a data processing apparatus/device/system, a processing apparatus/device/system comprising a processor, a computer program (product) comprising instructions, a computer-readable (storage) medium/data carrier, a non-transitory computer-readable medium, a data carrier signal and other technical means or tools configured to implement a neural network.

Embodiments of the present disclosure provide a neural network that utilizes requantization of tensor data between layers of the neural network. The tensor data may initially be quantized in a first quantization format and provided to a first layer of the neural network for processing. After the first layer has processed the quantized tensor data, the data is passed to a requantization unit or circuit. The requantization unit requantizes the data into a same quantization format, a new quantization format, or both the same quantization format and the new quantization format. The requantized data is then passed to the next layer of the neural network.

The requantization process provides many benefits. In some cases, a layer, process, or unit of neural network may more efficiently process data if quantization factors such as scaling and offset are changed from a previous layer. In some cases, a layer, process, or unit of a neural network may more efficiently process data if an entirely different quantization format is utilized. In some cases, it may be beneficial for two parallel layers, units, or processes to receive data from a previous layer in different quantization formats. Embodiments of the present disclosure provide the flexibility to requantize tensor data in a variety of ways between layers, processes, or units of a neural network.

In some embodiments, the neural network is a convolutional neural network (CNN). Each layer of the CNN includes a convolution process, an activation process, and a pooling process. Requantization units may be implemented after the convolution process, the activation process, the pooling process, or after each of these processes.

In some embodiments, a CNN network includes convolution circuitry configured to generate a plurality of convolution values by performing a convolution operation on a plurality of quantized input values. The CNN includes first requantization circuitry coupled to the convolution circuitry and configured to generate a plurality of first quantized output values in a first quantization format by performing a first quantization process on the convolution values.

In some embodiments, a method includes receiving, at a first layer of a neural network, an input tensor including a plurality of quantized input data values and generating intermediate data values from the input tensor values by performing a first operation on the quantized data values. The method includes generating, at the first layer, a first output tensor including a plurality of first quantized output data values. The generating includes by performing a first requantization process on the intermediate data values.

In some embodiments, an electronic device includes a neural network. The neural network includes a stream link configured to provide tensor data including a plurality of quantized input data values and a hardware accelerator configured to receive the tensor data and to generate intermediate data values by performing an operation on the quantized input data values. The neural network includes requantization circuitry configured to generate a plurality of quantized output data values by performing a requantization operation on the intermediate data values.

In some embodiments, a non-transitory computer-readable medium having contents which configure a hardware accelerator of convolutional neural network to perform a method. The method includes receiving an input tensor including a plurality of quantized input data values, and generating intermediate data values from the input tensor values by performing a first operation on the quantized data values. The method includes generating a first output tensor including a plurality of first quantized output data values. The generating includes performing a first requantization process on the intermediate data values.

BRIEF DESCRIPTION OF THE SEVERAL VIEWS OF THE DRAWINGS

Figure 1 is a block diagram of an electronic device, according to some embodiments.
Figure 2 is a block diagram of process flow within a convolutional neural network, CNN, according to some embodiments.
Figure 3 is a representation of a feature tensor, according to some embodiments.
Figures 4A-4C are graphs illustrating principles of quantization, in accordance with some embodiments.
Figure 5A-5C are block diagrams of convolution layers of a CNN, in accordance with some embodiments.
Figure 6 is a block diagram of a pooling layer of a CNN, in accordance with some embodiments.
Figure 7 is a block diagram of an activation process of a CNN, in accordance with some embodiments.
Figure 8 is flow diagram of method for operating a CNN, in accordance with some embodiments.
Figure 9 is a functional block diagram of an electronic device or system, in accordance with some embodiments.

## DETAILED DESCRIPTION

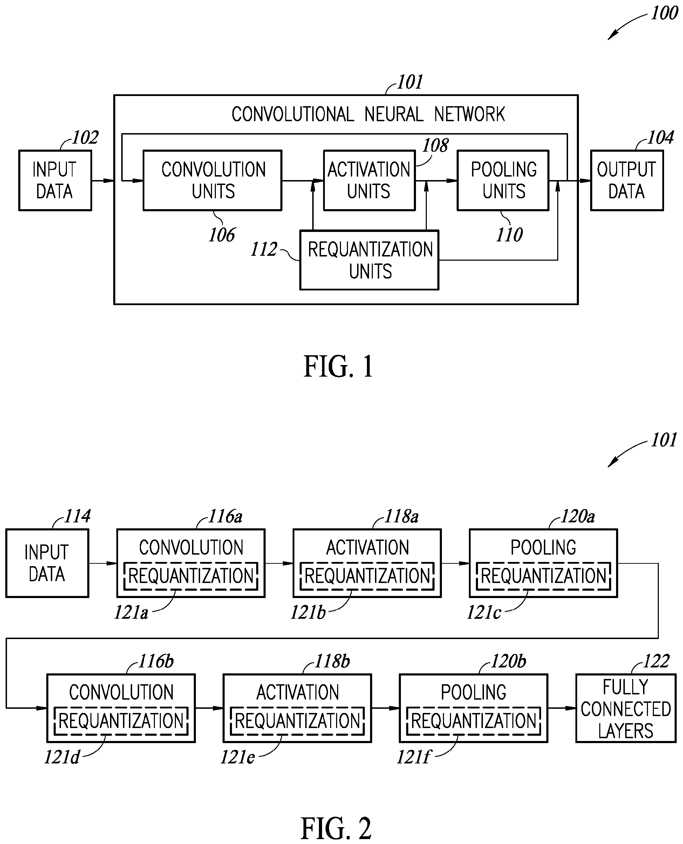

Figure 1 is a block diagram of an electronic device 100, according to some embodiments. The electronic device 100 includes a convolutional neural network (CNN) 101.

As noted, the designation neural network is held herein to imply the use of technical means and may thus take the form of, e.g.: a computer-implemented method, namely a method carried out by a computer, a data processing apparatus/device/system, a processing apparatus/device/system comprising a processor, a computer program (product) comprising instructions, a computer-readable (storage) medium/data carrier, a non-transitory computer-readable medium, a data carrier signal and other technical means or tools configured to implement a neural network.

The CNN 101 receives input data 102 and generates output data 104 based on the input data 102. The CNN 101 generates the output data 104 by performing one or more convolution operations on the input data 102.

In one embodiment, the input data 102 is provided by an image sensor (not shown) or another type of sensor of the electronic device 100. Accordingly, the input data 102 can include image data corresponding to one or more images captured by the image sensor. The image data is formatted so that it can be received by the CNN 101. The CNN 101 analyzes the input data 102 and generates the output data 104. The output data 104 indicates a prediction or classification related to one or more aspects of the image data. The output data 104 can correspond to recognizing shapes, objects, faces, or other aspects of an image.

While various examples herein focus on a CNN 101 implemented in conjunction with an image sensor, the CNN 101 may be implemented in conjunction with other types of sensors without departing from the scope of the present disclosure, or various combinations of types of sensors. Additionally, the CNN 101 may process data other than sensor data without departing from the scope of the present disclosure. Furthermore, machine learning networks or processes other than CNNs can be utilized without departing from the scope of the present disclosure.

In one embodiment, the CNN 101 is trained with a machine learning process to recognize aspects of training images that are provided to the CNN 101. The machine learning process includes passing a plurality of training images with known features to the CNN. The machine learning process trains the CNN 101 to generate prediction data that accurately predicts or classifies the features of the training images. The training process can include a deep learning process.

The CNN 101 includes a plurality of convolution units or circuits 106, activation units 108, and pooling units 110. The convolution units 106 implement convolution layers of the CNN 101. Accordingly, each convolution unit 106 is the hardware block that implements the convolution operations corresponding to a convolution layer of the CNN 101. Each activation unit 108 is a hardware block that implements an activation operation after the convolution operation. Each pooling unit 110 is a hardware block that implements pooling functions between the convolution layers. The convolution units 106, the activation units 108, and the pooling units 110 cooperate in generating output data 104 from the input data 102.

In one embodiment, each convolution unit 106 includes a convolution accelerator. Each convolution unit 106 performs convolution operations on feature data provided to the convolution unit 106. The feature data is generated from the input data 102. The convolution operations at a convolution layer convolve the feature data with kernel data generated during the machine learning process for the CNN 101. The convolution operations result in feature data that is changed in accordance with the kernel data.

The data from the convolution unit 106 is provided to an activation unit 108. The activation unit 108 performs activation operations on the data from the convolution unit 106. The activation operation can include performing nonlinear operations on data values received from the convolution unit 106. One example of an activation operation is a rectified linear unit (ReLU) operation. Other types of activation operations can be utilized without departing from the scope of the present disclosure.

The pooling unit 110 receives feature data from the activation unit 108. The pooling unit 110 performs pooling operations on the feature data received from the activation unit 108. Pooling operations are performed on the feature data to prepare the feature data for the convolution operations of the next convolution layer. The pooling unit 110 performs the pooling operations between convolution layers. The pooling unit 110 is used to accelerate convolutional neural network operations. The pooling unit 110 can perform max pooling operations, minimum pooling operations, average pooling operations, or other types of pooling operations.

The CNN 101 utilizes tensor data structures for the feature data. The input of each unit 106, 108, and 110 is an input tensor. The output of each unit 106, 108, and 110 is an output tensor with different data values than the input tensor. In one example, the convolution unit 106 receives an input tensor and generates an output tensor. The activation unit 108 receives, as an input tensor, the output tensor of the convolution unit 106 and generates an output tensor. The pooling unit 110 receives, as an input tensor, the output tensor of the activation unit 108 and generates an output tensor. The output tensor of the pooling unit 110 may be passed to the convolution unit 106 of the next convolution layer. 106

Tensors are similar to matrices in that they include a plurality of rows and columns with data values in the various data fields. A convolution operation generates an output tensor of the same dimensions as the input tensor, though with different data values. An activation operation generates an output tensor of the same dimensions as the input tensor, though with different data values. A pooling operation generates an output tensor of reduced dimensions compared to the input tensor.

A pooling operation takes a portion, such as a pooling window, of a feature tensor and generates a pooled sub-tensor of reduced dimension compared to the pooling operation. Each data field in the pooled sub-tensor is generated by performing a particular type of mathematical operation on a plurality of data fields (such as taking the maximum value, the minimum value, or the average value from those data fields) from the feature tensor. The pooling operations are performed on each portion of the feature tensor. The various pooling sub-tensors are passed to the next convolution layer as the feature tensor for that convolution layer. Accordingly, pooling helps to reduce and arrange data for the next convolution operation.

Continuing with the example of an image sensor, the image sensor may output sensor data of a plurality of floating-point data values. The floating-point data values may utilize large amounts of memory or may otherwise be unwieldy or inefficient to process with the CNN 101. Accordingly, before the sensor data is arranged into an input tensor, the floating-point data values may undergo a quantization process. The quantization process converts each floating-point data value to a quantized data value. The quantized data value may have reduced numbers of bits compared to the floating-point data values, may be changed to integers, or may otherwise be changed in order to promote efficient processing by the CNN 101.

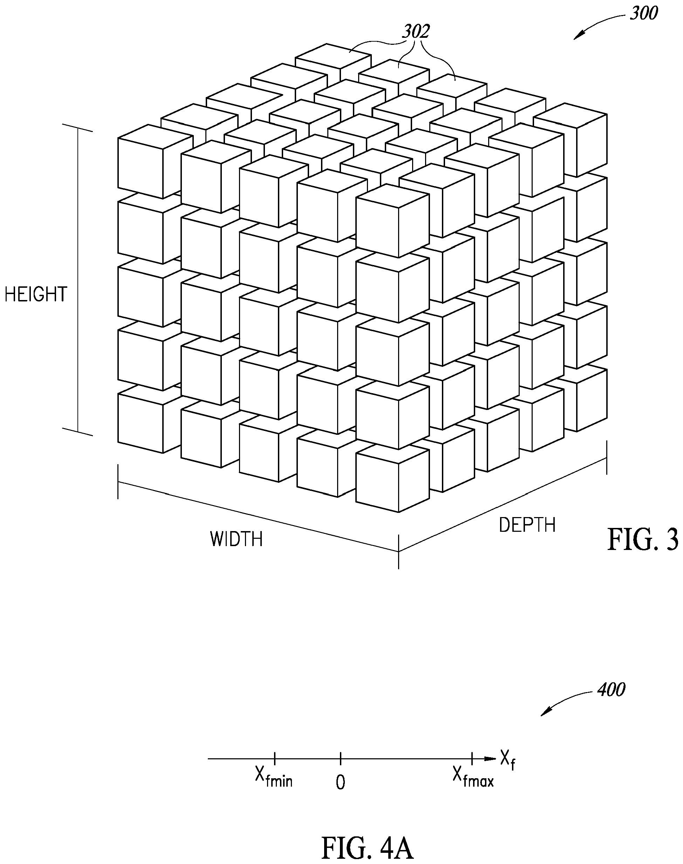

Various quantization formats can be utilized for the input data 102. One possible quantization format is scale/offset format. Another possible quantization format is fixed point format. There may be various advantages to using either of these formats. Further details regarding these quantization formats are provided in relation to Figures 4A-4C. While the description and figures primarily describe scale/offset and fixed point quantization formats, other quantization formats can be utilized without departing from the scope of the present disclosure.

The CNN 101 includes a plurality of requantization units 112. Figure 1 illustrates the requantization units 112 as being outside the path between the convolution units 106 the activation units 108, and the pooling unit 110. However, in practice, the requantization units are typically positioned between the various hardware units of the CNN 101. For example, a requantization unit 112 may be positioned directly between the convolution unit 106 and an activation unit 108. In other words, the output of the convolution unit is passed to a requantization unit 112. The requantization unit 112 performs a requantization operation on the data values of the output tensor of the convolution unit 106 and then passes the requantized tensor values to the activation unit 108.

A requantization unit 112 may be positioned between an activation unit 108 and the subsequent pooling unit 110. The requantization unit 112 receives the output tensor from the activation unit 108, performs a requantization operation on the data values of the output tensor of the activation unit 108, and passes the requantized tensor to the pooling unit 110.

A requantization unit 112 may be positioned between the pooling unit 110 and the subsequent convolution unit 106. The requantization unit 112 receives the output tensor of the pooling unit 110, performs a requantization operation on the data values of the output tensor of the pooling unit 110, and passes the requantized tensor to the convolution unit 106.

The CNN 101 may include a single requantization unit 112 positioned between two of the hardware units 106, 108, and 110. The CNN 101 may include multiple requantization units 112 positioned between various of the hardware units 106, 108, and 110.

In one example, a requantization unit 112 is positioned between the first convolution unit 106 and the first activation unit 108. The input data 102 has been quantized in a scale/offset format including a scaling factor and an offset. The convolution unit 106 performs the convolution operation on the quantized input tensor and generates an output tensor. The requantization unit 112 can requantize the data values of the output tensor of the convolution unit 106 into a different quantization format, for example, a fixed point quantization format. Alternatively, the requantization unit 112 can requantize the data values of the output tensor of the convolution unit 106 into the scale/offset format but with a different scaling factor and a different offset. Alternatively, there can be two requantization units positioned at the output of the convolution unit 106. One of the requantization units 112 can requantize the output tensor into a scale/offset format. The other requantization unit 112 can requantize the output tensor into a fixed point quantization format. If there are two requantization units 112 that receive the output of the convolution unit 106, one of the requantization units 112 may pass its requantized tensor to the activation unit 108 while the other requantization unit 112 may pass its requantized tensor to a different unit of the CNN 101, or to a process or system outside the CNN 101. Requantization units 112 can be positioned in the same manner at the outputs of activation units 108 and pooling units 110.

As used herein, the term "requantization" may be used interchangeably with the term "quantization". In practice, each requantization unit 112 is simply a quantization unit that performs a quantization operation. The term "requantization" is utilized because the quantization units may perform quantization on data values that were previously quantized, or on data values generated from previously quantized data values.

For simplicity, the CNN 101 of Figure 1 illustrates convolution units 106, activation units 108, pooling units 110, and requantization units 112. However, in practice, the CNN 101 may include many other hardware blocks. These other hardware blocks can include batch normalization blocks, scaling blocks, biasing blocks, normalization blocks, buffers, stream switches, and other types of hardware blocks that perform various operations as part of the CNN 101.

As used herein, the term "convolution unit" can be used interchangeably with "convolution circuit" or "convolution circuitry". As used herein, the term "pooling unit" can be used interchangeably with "pooling circuit" or "pooling circuitry". As used herein, the term "activation unit" can be used interchangeably with "activation circuit" or "activation circuitry". As used herein, the term "requantization unit" can be used interchangeably with "requantization circuit" or "requantization circuitry". This is because convolution units 106, the activation units 108, the pooling units 110, and the requantization units 112 are hardware circuits.

Further details related to electronic devices implementing convolutional neural networks can be found in U.S. Patent Application Publication 2019/0266479, filed February 20, 2019, in U.S. Patent Application Publication No. 2019/0266485, filed February 20, 2019, and in U.S. Patent Application Publication No. 2019/0266784, filed February 20, 2019.

Figure 2 is a simplified block diagram of process flow within a CNN 101, according to one embodiment. The CNN 101 includes an input layer 114, convolution layers 116a and 116b, activation layers 118a and 118b, pooling layers 120a and 120b, and one or more fully connected layers 122. The input data 102 is provided to the input layer 114 and is passed through various convolution layers 116a and 116b, the activation layers 118a and 118b, the pooling layers 120a and 120b, and the fully connected layers 122. The output of the final fully connected layer 122 is the output data 104. Each of the convolution layers 116a and 116b, activation layers 118a and 118b, and pooling layers 120a and 120b may include a respective requantization process 121a-f.

In one embodiment, the first convolution layer 116a receives feature data from the input layer 114. The feature data for the first convolution layer 116a is the input data 102. The first convolution layer 116a generates feature data from the input data 102 by performing convolution operations between the feature tensors of the input data 102 and the kernel tensors of the first convolution layer 116a. The output of the first convolution layer 116a is also called feature data herein.

The first convolution layer 116a also includes a requantization process 121a. The requantization process 121a may be performed on the feature data that is generated by the convolution operation associated with the first convolution layer 116a. The requantization process 121a may generate feature data in a same quantization format, a different quantization format, or both in a same quantization format and a different quantization format.

The convolution process and the requantization process 121a of the convolution layer 116a may collectively make up the convolution layer 116a. The convolution process and the requantization process of the convolution layer 116a may be performed by a convolution unit 106 and a requantization unit 112 as described in relation to Figure 1.

The first convolution layer 116a passes the requantized feature data to the activation layer 118a. The activation layer 118a performs an activation process on the requantized feature data from the convolution layer 116a. The activation process can include performing a nonlinear mathematical operation on each of the quantized data values from the feature tensor. As set forth previously, one example of a nonlinear mathematical operation is a ReLU operation.

The activation layer 118a also includes a requantization process 121b. The requantization process 121b may be performed on the feature data that is generated by the activation operation associated with the activation layer 118a. The requantization process 121b may generate feature data in a same quantization format, a different quantization format, or both in a same quantization format and a different quantization format.

The activation process and the requantization process 121b of the activation layer 118a may collectively make up the activation layer 118a. The activation process and the requantization process of the activation layer 118a may be performed by an activation unit 108 and a requantization unit 112 as described in relation to Figure 1.

The activation layer 118a passes the requantized feature data to the pooling layer 120a. The pooling layer 120a performs a pooling operation on the feature data received from the activation layer 118a. The pooling operation can include reducing the dimensions of the feature tensor by performing one or more of a max pooling operation, a minimum pooling operation, and average pooling operation, or other types of pooling operations.

The pooling layer 120a also includes a requantization process 121c. The requantization process 121c may be performed on the feature data that is generated by the pooling operation associated with the pooling layer 120a. The requantization process 121c may generate feature data in a same quantization format, a different quantization format, or both in a same quantization format and a different quantization format.

The pooling operation and the requantization process 121c of the pooling layer 120a may collectively make up the pooling layer 120a. The pooling operation and the requantization process of the pooling layer 120a may be performed by a pooling unit 110 and a requantization unit 112.

The second convolution layer 116b receives feature data from the pooling layer 120a. The first convolution layer 116b generates feature data from the pooling layer 118a by performing convolution operations between the feature tensors of the pooling layer 118a and the kernel tensors of the second convolution layer 116b.

The second convolution layer 116b also includes a requantization process 121d. The requantization process 121d may be performed on the feature data that is generated by the convolution operation associated with the second convolution layer 116b. The requantization process 121d may generate feature data in a same quantization format, a different quantization format, or both in a same quantization format and a different quantization format.

The convolution process and the requantization process 121d of the convolution layer 116b may collectively make up the convolution layer 116b. The convolution process and the requantization process of the convolution layer 116b may be performed by a convolution unit 106 and a requantization unit 112 as described in relation to Figure 1.

The convolution layer 116b passes the requantized feature data to the activation layer 118b. The activation layer 118b performs an activation process on the requantized feature data from the convolution layer 116b. The activation process can include performing a nonlinear mathematical operation on each of the quantized data values from the feature tensor.

The activation layer 118b also includes a requantization process 121e. The requantization process 121e may be performed on the feature data that is generated by the activation operation associated with the activation layer 118b. The requantization process 121e may generate feature data in a same quantization format, a different quantization format, or both in a same quantization format and a different quantization format.

The activation process and the requantization process 121e of the activation layer 118b may collectively make up the activation layer 118b. The activation process and the requantization process of the activation layer 118b may be performed by an activation unit 108 and a requantization unit 112 as described in relation to Figure 1.

The activation layer 118b passes the requantized feature data to the pooling layer 120b. The pooling layer 120b performs a pooling operation on the feature data received from the activation layer 118b. The pooling operation can include reducing the dimensions of the feature tensor by performing one or more of a max pooling operation, a minimum pooling operation, and average pooling operation, or other types of pooling operations.

The pooling layer 120b also includes a requantization process 121f. The requantization process 121f may be performed on the feature data that is generated by the pooling operation associated with the pooling layer 120b. The requantization process 121f may generate feature data in a same quantization format, a different quantization format, or both in a same quantization format and a different quantization format.

The pooling operation and the requantization process 121f of the pooling layer 120b may collectively make up the pooling layer 120b. The pooling operation and the requantization process 121f of the pooling layer 120b may be performed by a pooling unit 110 and a requantization unit 112.

While each layer shown in Figure 2 includes a requantization process, in practice, one or more of the layers may not include a requantization process. Furthermore, the CNN 101 may include more layers than shown in Figure 2. In practice, the CNN 101 includes other processes than those shown in Figure 2. In particular, the CNN 101 may include batch normalization operations, scaling operations, biasing operations, normalization operations, activation operations, and other types of operations

Figure 3 is a representation of a feature tensor 128, according to one embodiment. The feature tensor 128 includes a plurality of blocks 302. Each of these blocks 302 represents a data value. The tensor 128 includes height, width, and depth. While the feature tensor 128 of Figure 3 illustrates a 5x5x5 tensor, in practice, the feature tensor 128 may include other height, width, and depth dimensions.

In one embodiment, during the various convolution, activation, pooling, and requantization operations, the feature tensor 128 is divided into batches. The feature tensor 128 may be batched by height, width, or depth. Convolution, activation, pooling, and requantization operations are performed on the batches from the feature tensor. Each batch may be considered a sub-tensor of the feature tensor 128.

Figure 4A is a graph 400 illustrating a range of floating-point values xf, in accordance with some embodiments. The floating-point values xf may correspond to the sensor data initially received by a CNN 101 prior to quantization. The floating-point values have a range between a minimum floating-point value $x_{fmin}$ and a maximum floating-point value $x_{fmax}$. The graph 400 illustrates that $x_{fmin}$ is less than zero and $x_{fmax}$ is greater than zero.

In the example of the graph 400, the range of positive values of xf is greater than the range of negative values of $x_f$. One way to look at this is that the absolute value of $x_{fmax}$ is greater than the absolute value of $x_{fmin}$. In one example, xf is an eight bit number that can have values between -128 and 128. $x_{fmax}$ may be 128, while $x_{fmin}$ may be -14. Thus, there is a large amount of the range of negative values that are unused in Figure 4A.

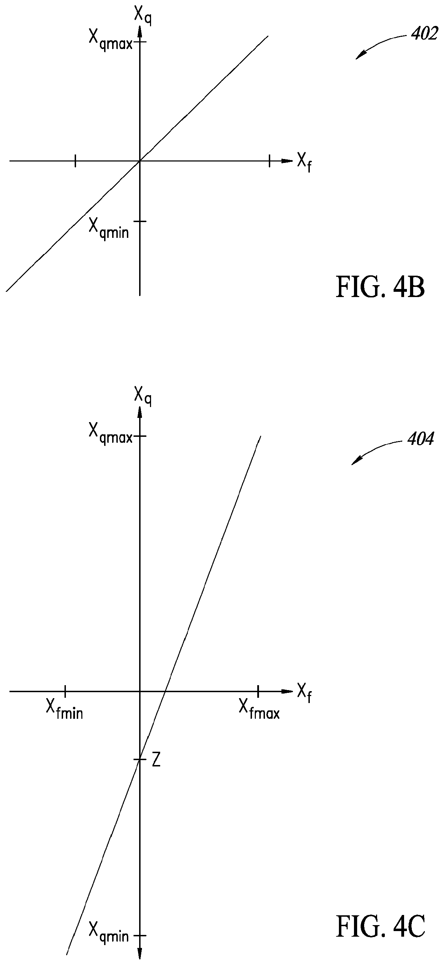

Figure 4B is a graph 402 illustrating a range of quantized values xq in accordance with a fixed point quantization scheme, in accordance with some embodiments. In the fixed point quantization scheme, each value $x_f$ is quantized into a corresponding value $x_q$. The floating-point values $x_f$ correspond to the horizontal axis of the graph 402. The quantized values $x_q$ correspond to the vertical axis of the graph 402. Fixed point quantization is typically performed by multiplying each value $x_f$ by a scaling value. Typically, the scaling value is a multiple of 2.

One characteristic of fixed point quantization is that the ranges of positive and negative values will have similar characteristics as the range of positive and negative values of the floating-point values $x_f$ from which the quantized values $x_q$ are generated. Just as the range of negative values of xf is less than the range of positive values of $x_f$, the range of negative values of $x_q$ is less than the range of positive values of $x_q$. This can be understood by noting that the absolute value of the lowest quantized value $x_{qmin}$ is less than the absolute value of the highest quantized value $x_{qmax}$. Accordingly there is a similarly large range of unused negative values for the fixed point quantization scheme represented in the graph 402.

Figure 4C is a graph 404 illustrating a range of quantized values $x_q$ in accordance with a scale/offset quantization scheme, in accordance with some embodiments. In the scale/offset quantization scheme, the quantized values are generated in accordance with a scaling factor s and a zero offset z. The value of z corresponds to a y-intercept of the quantized values. The scaling factor is the inverse of the slope.

One benefit of the scale/offset quantization scheme is that the full range of positive and negative values is utilized. The absolute value of the minimum quantized value $x_{qmin}$ is approximately the same as the absolute value of the maximum quantized value $x_{qmax}$ in the scale/offset quantization scheme. Accordingly, the value of z and the scaling factor can be selected based on the $x_{fmin}$ and $x_{fmax}$ in order to provide quantized values that utilize the full range of positive and negative data values available in the corresponding bit range associated with the scale/offset quantization scheme. The number of bits for each scale/offset quantized value $x_q$ may be the same or less than the number of bits for each floating-point value xf.

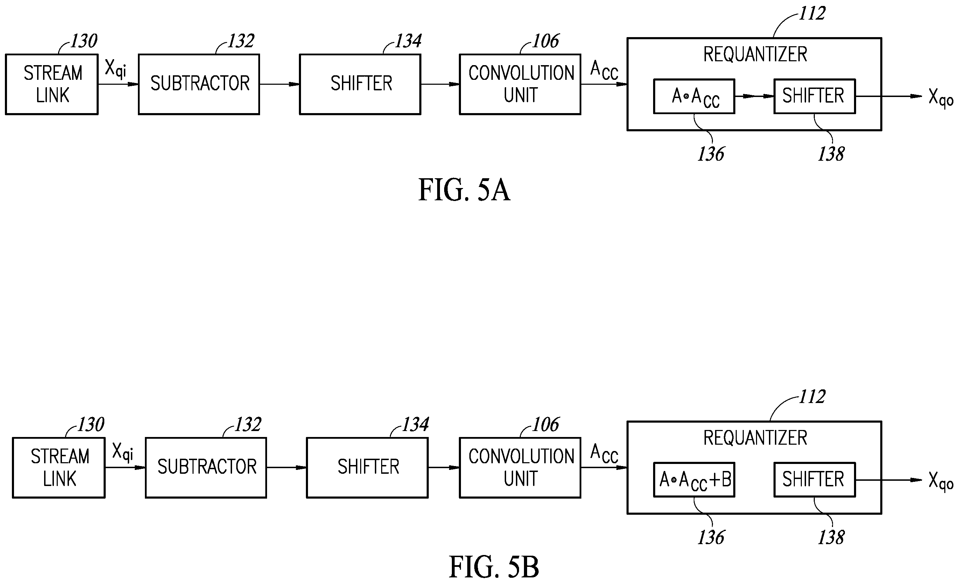

Figures 5A-5C represent convolution units of a CNN together with requantization units, in accordance with some embodiments. Prior to discussing Figures 5A-5C, it is beneficial to describe some relationships associated with quantization from floating point values, and requantization of a quantized value. For the discussion of Figures 5A-5C, floating point values xf are related to scale/offset quantized values $x_q$ by the following general relationship:

$$x_f = s(x_q - z), (1a)$$

where s is the scaling factor and z is the zero offset. In the following discussion, terms with a suffix "i" correspond to input values at a convolution layer. Terms with a suffix "o" correspond to output values of a requantization operation. If the values at the input have been previously quantized, then the floating point values xf from which quantized input values $x_{qi}$ were generated can be related to the quantized input values $x_{qi}$ by the following relationship:

$$x_f = s_i(x_{qi} - z_i), (1b)$$

where $s_i$ is the input scaling factor and $z_i$ is the input zero offset associated with a quantization operation that occurred prior to the convolution layer.

A convolution operation of a floating point value has the following general formula:

$$Conv = \sum_n x_f * w_f, (2)$$

where $w_f$ is a floating point weighting value associated with the convolution operation, Conv is the output of the convolution operation, and the index n refers to a particular value or place within a tensor. Rewriting equation 2 using equation 1b for $x_f$ and rewriting the floating point weighting value $w_f$ in a scale/offset format provides the following:

$$Conv = \sum_n s_i(x_{qi} - z_i) * s_w(w - z_w), (3)$$

where w is scale/offset weighting value, $s_w$ is the scaling factor associated with the weighting value $w_f$ in scale/offset format, and $z_w$ is the zero offset of the weighting value $w_f$ in the scale offset format. The following relationships are useful in simplifying the convolution value:

$$X_i = (x_{qi} - z_i) \ and \ W = (w - z_w). \quad (4)$$

The convolution value can now be represented in the following relationship:

$$Conv = (s_i * s_w) \sum_n X_i * W. \quad (5)$$

Further, if we rename the value inside the sum as ACC in the following manner:

$$Acc = \sum_n X_i * W, \quad (6)$$

We can then represent the convolution value in the following manner:

$$Conv = (s_i * s_w) \ Acc. \quad (7)$$

Introducing a requantization unit operation onto the convolution operation, the value from equation 7 can be represented in the following manner:

$$s_o(x_{qo} - z_o) = (s_i * s_w) \ Acc, \quad (8)$$

where $s_o$ is the output scaling factor associated with a requantization process, $x_{qo}$ is the quantized value generated by the requantization process, and $z_o$ is the output zero offset associated with the requantization operation.

If we introduce a saturation operation onto the output quantized value, the output quantized value can be represented in the following relationship:

$$x_{qo} = \text{SAT}(A * Acc + B), \quad (9)$$

where SAT is a saturation operation that forces $x_{qo}$ to be represented in a desired number of bits (e.g. 8b or 16b), A is $(s_i * s_o)/ s_w$, and B is the output zero offset represented in a selected number of bits.

Figure 5A illustrates a convolution unit 106 of a CNN 101, in accordance with some embodiments. A stream link 130 provides the quantized values $x_{qi}$ of an input tensor. The input tensor can be received from a previous pooling layer, from a previous activation layer, or from an initial quantization operation. In any case, the data values in the tensor are provided by the stream link 130 as a stream of quantized input values $x_{qi}$. Figure 5A illustrates a subtractor 132 and a shifter 134 positioned between the stream link 130 and the convolution unit 106. While the subtractor 132 and the shifter 134 are shown as separate hardware blocks from the convolution unit 106, in practice, the subtractor 132 and the shifter 134 may be part of the convolution unit 106.

The convolution scheme shown in Figure 5A illustrates a requantization operation associated with the convolution unit 106. A requantization unit 112 is coupled to the convolution unit 106. The requantization unit 112 requantizes data values from the convolution unit 106. Although the requantization unit 112 is shown as a separate hardware block from the convolution unit 106, in some cases the requantization unit 112 may be considered part of the convolution unit 106. The requantization unit 112 requantizes the output of the convolution unit 106. Furthermore, in practice, the subtractor 132 and the shifter 134 may be considered as part of the requantization unit 112.

In the example of Figure 5A, the requantization unit 112 requantizes the output of the convolution unit 106 into a fixed point quantization scheme. If values $x_{qi}$ from the stream link 130 were previously in a scale/offset format, the subtractor 132 may subtract a value corresponding to the zero offset zi of the input quantization scheme. The shifter 134 may shift the data values received from the subtractor 132 back down to a smaller number of bits. For example, the quantized input values $x_{qi}$ from the stream link 130 may initially have 8-bit values. The subtractor 132 may be a 24-bit subtractor and could generate 25-bit values while subtracting the input zero offset $z_i$. The shifter 134 shifts the data values from the subtractor 132 back into eight bit values. If the quantized input values $x_{qi}$ provided from the stream link 130 are in a fixed point quantization scheme, then the subtractor 132 may be selectively configured to subtract a value of zero. Because there is no Z-offset in the fixed point quantization scheme, the input Z-offset $z_i$ can be considered to be zero.

The convolution unit 106 receives the quantized input values $x_{qi}$ after processing by the subtractor 132 and the shifter 134. The convolution unit 106 performs the convolution operation on each of the quantized input values $x_{qi}$. The convolution operation corresponds to multiplying each quantized value by a weighting factor. The output of the convolution unit 106 is ACC. Each data value output by the convolution unit 106 is given the notation ACC because the convolution unit 106 may be considered a convolution accelerator.

The requantization unit 112 receives the values ACC and performs a requantization operation. The requantization unit 112 can be considered an arithmetic unit including arithmetic sub-units 136 and 138. An arithmetic sub-unit 136 multiplies each value ACC by a value. As described previously, the value A corresponds to an input scaling factor associated with the initial quantization that resulted in the quantized input values $x_{qi}$ and a scaling factor $s_w$ associated with the weighting values of the convolution unit 106. If there is an output scaling factor so associated with the requantization, then the value A may correspond to $s_i * s_w / s_o$.

The sub-unit 136 provides the data values to the shifter 138. The shifter 138 can shift the data value up or down as desired. For example, the shifter 138 may saturate the values provided by the sub-unit 136 to a lower bit value (e.g. from 16-bit to 8-bit). The output of the requantization unit 112 is the requantized data values $x_{qo}$. In practice, the output of the requantization unit 112 of Figure 5A can correspond to the output of the convolution layer. As set forth previously, the requantization unit 112 may be part of the convolution unit 106 such that the convolution unit 106 performs the convolution and requantization operation.

Figure 5B is an illustration of a convolution unit 106 of a CNN 101, in accordance with some embodiments. The convolution operation of Figure 5B is substantially similar to the convolution operation of Figure 5A. The primary difference is that the requantization unit 112 of Figure 5B requantizes the output of the convolution unit 106 into a scale/offset format rather than a fixed point quantization form. The sub-unit 136 of the requantization unit 112 of Figure 5B multiplies each value ACC by the factor A and adds a value B. The factor A corresponds to an input scaling factor multiplied by a weighting scaling factor divided by an output scaling factor, as described previously. The value B corresponds to the Z-offset $z_o$ of the scale/offset quantization format of the requantization unit 112.

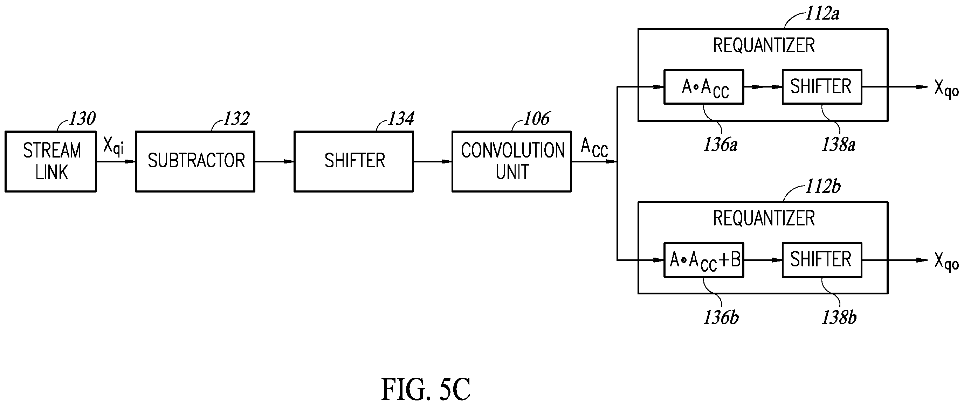

Figure 5C is an illustration of a convolution unit 106 of the CNN 101, in accordance with some embodiments. The convolution operation of Figure 5C is different from the convolution operations of Figures 5A and 5B in that there are two requantization units 112a and 112b coupled to the convolution unit 106. The first requantization unit 112a is similar to the requantization unit 112 of Figure 5A. The second requantization unit 112b is similar to the requantization unit 112 of Figure 5B. Each of the requantization units 112a and 112b receive the values ACC from the convolution unit 106. The requantization unit 112a requantizes the values ACC in accordance with a fixed point quantization scheme as described in relation to Figure 5A. The requantization unit 112b requantizes the values ACC in accordance with a scale/offset quantization scheme as described in relation to Figure 5B. Accordingly, the convolution layer Figure 5C receives quantized input data values in accordance with a first quantization format, performs the convolution operation on the input quantized data values, and generates output quantized data values $x_{qo}$ in the first quantization format and in the second quantization format.

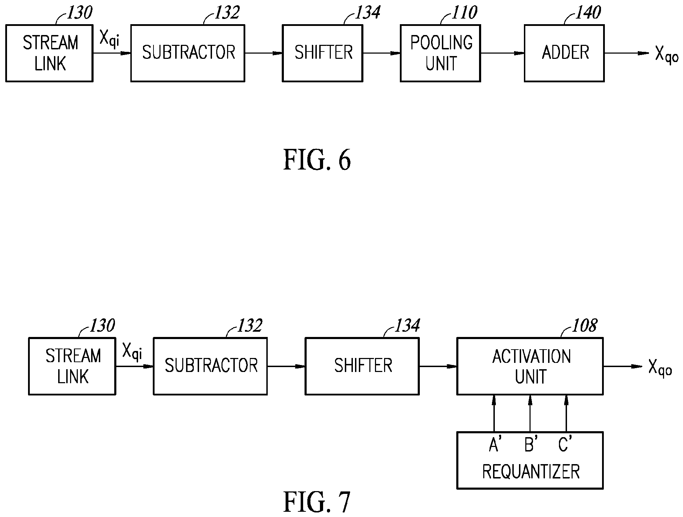

Figure 6 is an illustration of a pooling operation of a CNN 101, in accordance with some embodiments. In Figure 6, a pooling unit 110 receives quantized data values $x_{qi}$ from the stream link 130. Prior to proceeding with a description of the components of Figure 6, it is beneficial to introduce some relationships associated with pooling operations on floating point values, pooling operations on quantized values $x_{qi}$, and requantization of pooled values. The following discussion is related primarily to average pooling operations. However, other types of pooling operations can be utilized without departing from the scope of the present disclosure.

An average pooling value y of n floating point values xf of an input tensor can be represented by the following relationship:

$$y = \frac{1}{n} \sum_n x_f. \quad (10)$$

Substituting equation 1b into equation 10 provides the following relationship:

$$y = \frac{s_i}{n}\sum_n x_{qi} - \frac{s_i}{n}\sum_n z_i. \quad (11)$$

Let the quantity C be defined in the following manner:

$$C = \frac{s_i}{n}\sum_n z_i. \quad (12)$$

Let the quantity Xi be defined in the following manner:

$$X_i = \left(x_{qi} - z_i\right). \quad (13)$$

The output Acc of the pooling unit 110 can be given in the following manner:

$$ACC = \frac{1}{n}\sum_n X_i. \quad (14)$$

Requantization can be performed in accordance with the following relationship:

$$s_o(x_o - z_o) = s_i * Acc - C. \quad (15)$$

More particularly, requantized output values in scale/offset format can be generated in accordance with the following relationship:

$$x_{qo} = \frac{s_i}{s_o} * Acc + \left(z_o - \frac{C}{s_o}\right). \quad (16)$$

Requantization into fixed point offset can be performed in following manner:

$$x_{qo} = \frac{s_i}{s_o} * Acc - C. \quad (17)$$

Returning to the description of Figure 6, the quantized input data values $x_{qi}$ may be the data values of a tensor output by a convolution layer or an activation layer. The quantized input data values $x_{qi}$ may be in a fixed point format or scale/offset format. Similar to the convolution layer shown in Figures 5A-5C, the pooling layer includes a subtractor 132 and the shifter 134. The subtractor 132 subtracts a zero offset value $z_o$ associated with the previous quantization process. The shifter 134 shifts data values to a desired number of bits.

The pooling unit 110 performs a pooling operation on the data values received from the shifter. Typically, the pooling operation can include reducing the dimensions of the input tensor. This can be done by performing minimum pooling operations, maximum pooling operations, average pooling operations, or other types of pooling operations in which multiple data values from the input tensor are combined into a single data value in a smaller output tensor.

The pooling unit 110 may generate data values ACC. However, prior to outputting the data values ACC, the pooling unit 110 may multiply each data value ACC by a factor A corresponding to an input scaling factor divided by the product of an output scaling factor and a pooling factor. The pooling factor may correspond to the number of data values from the input tensor that are combined into a single output value in the output tensor. The adder 140 adds in the zero offset value associated with the new or next or following quantization operation. If the new quantization operation is a scale/offset quantization operation, then the adder adds in the zero offset value $z_o$. If the new quantization operation is a fixed point quantization operation, then the adder adds in a value of zero. A portion of the requantization operation is performed by the pooling unit 110 in the illustrated embodiment. The adder 140 corresponds to an arithmetic block that adds in the equivalent of B from Figures 5B and 5C or can be an independent adder circuit. The adder 140, the shifter 134, and the subtraction unit 132 may collectively be a requantization unit 112.

Figure 7 corresponds to an activation layer of a CNN 101, in accordance with some embodiments. The activation layer performs an activation operation on tensor values received from the convolution operation. The tensor values are quantized input values $x_{qi}$ received from the stream link 130. Before describing the components of the activation layer of Figure 7, it is beneficial to describe some relationships associated with non-linear activation of floating point and quantized values.

In some embodiments, the activation unit 108 uses a second degree polynomial to perform a non-linear transformation on input values. Beginning with the case of floating point input values xf, a non-linear function y(xf) may be applied to the floating point values xf in accordance with the following relationship:

$$y(x_f) = (ax_f + b)x_f + c, \ (18)$$

where a, b, and c are scalar coefficients. Introducing input quantization as described in equation 1b gives the following relationship:

$$y(x_f) = \{as_i(x_{qi} - z_i) + b\}s_i(x_{qi} - z_i) + c. \ (19)$$

Now let us introduce the following relationships:

$$X_i = x_i - z_i, \ (20)$$

$$A = as_i^2, \ (21)$$

$$B = bs_i, \text{ and } (22)$$

$$C = c. \ (23)$$

This allows us to present the non-linear function in the following form:

$$y(x_f) = AX_i^2 + BX_i + C \ (24)$$

We can now requantize the result in the previous equation to as follows:

$$s_o(x_{qo} - z_o) = AX_i^2 + BX_i + C. \ (25)$$

Let us further introduce the following relationships:

$$A' = (a*s_i{}^\wedge 2)/s_o, \ (26)$$

$$B' = b*s_i/s_o, \text{ and } (27)$$

$$C' = c/s_o + z_o. \ (28)$$

We can now represent the quantized output values with the following relationship:

$$x_{qo} = A'X_i^2 + B'X_i + C'. \ (29)$$

Returning now to the description of Figure 7, the activation layer includes a subtractor 132 and a shifter 134 positioned between the stream link 130 and the activation unit 108. The subtractor 132 of the shifter 134 perform the same operations described previously in relation to Figures 5A-6.

The activation unit 108 performs a nonlinear activation operation on each data value received from the previous convolution layer. The activation operation can utilize any general activation function. In one example, the activation operation is combined with the requantization unit 112 to perform an activation function and a requantization operation at the same time. The activation unit 108 receives the quantized input values $x_{qi}$ via the shifter 134 and generates the values $A*X^2 + B*X + C$ as described above. The requantization unit then requantizes these values with the values A', B', and C' as described above. The output of the activation unit 108 is requantized activated data values $x_{qo}$. Other types of activation and requantization can be utilized without departing from the scope of the present disclosure.

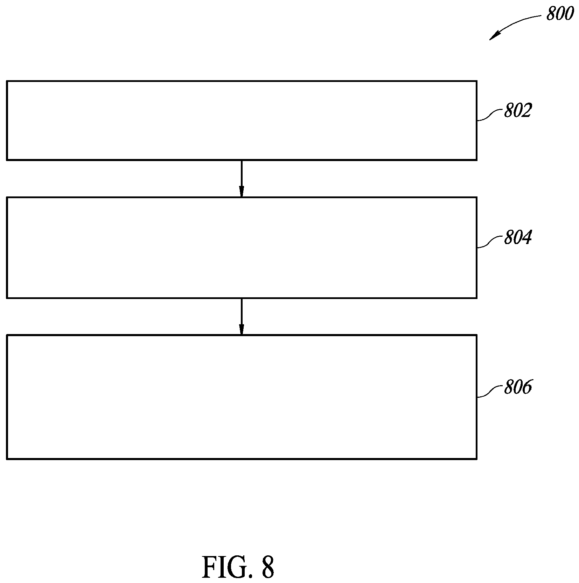

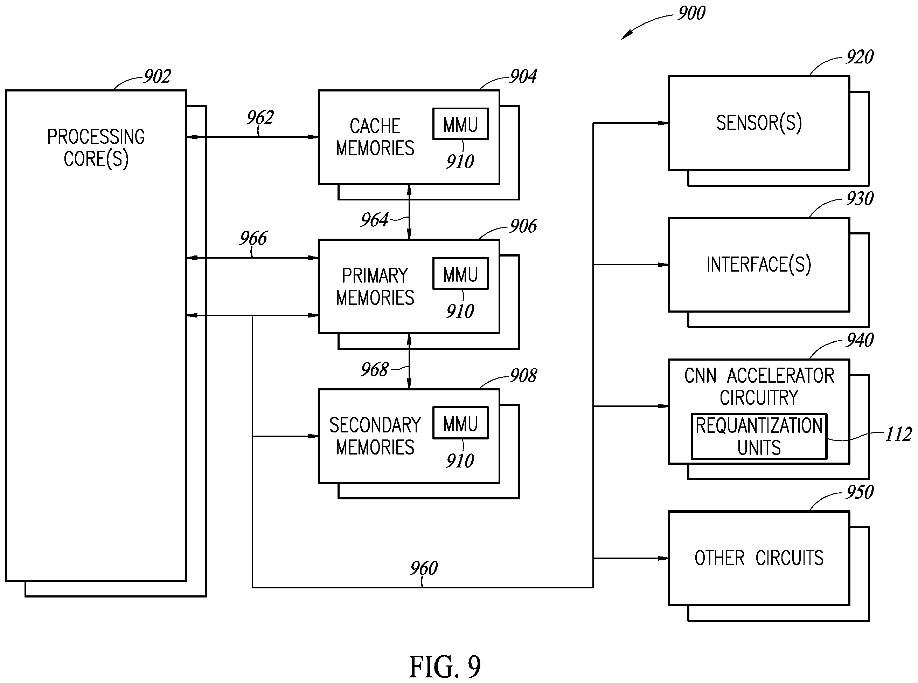

Figure 8 is a flow diagram of a method 800 for operating a CNN, in accordance with some embodiments. At 802, the method 800 includes receiving, at a first layer of a neural network, an input tensor including a plurality of quantized input data values. At 804, the method 800 includes generating intermediate data values from the input tensor values by performing a first operation on the quantized data values. At 806, the method 800 includes generating, at the first layer, a first output tensor including a plurality of first quantized output data values by performing a first requantization process on the intermediate data values.Figure 9 is a functional block diagram of an electronic device or system 900, in accordance with some embodiments. The system 900 can be utilized to implement a CNN, components of a CNN, or processes involving a CNN as described in relation to Figures 1-8. The system 900 comprises one or more processing cores or circuits 902. The processing cores 902 may comprise, for example, one or more processors, a state machine, a microprocessor, a programmable logic circuit, discrete circuitry, logic gates, registers, etc., and various combinations thereof. The processing cores may control overall operation of the system 900, execution of application programs by the system 900, etc.

The system 900 includes one or more memories, such as one or more volatile and/or non-volatile memories which may store, for example, all or part of instructions and data related to control of the system 900, applications and operations performed by the system 900, etc. As illustrated, the system 900 includes one or more cache memories 904, one or more primary memories 906, and one or more secondary memories 908, each comprising memory management circuitry or MMUs 910. One or more of the memories 904, 906, 908 includes a memory array, which, in operation, may be shared by one or more processes executed by the system 900.

The system 900 may include one or more sensors 920 (*e.g.,* image sensor, accelerometers, pressure sensors, temperature sensors, etc.), one or more interfaces 930 (e.g., wireless communication interfaces, wired communication interfaces, etc.), one or more ANN circuits, as illustrated convolutional neural network (CNN) accelerator circuits 940, and other circuits 950, which may include other functional circuits, antennas, power supplies, etc., and a main bus system 960. The accelerator circuits 940 can include convolution circuits, activation circuits, pooling circuits, and other circuits as described previously. The accelerator circuits 940 can include requantization circuits 112 as described previously.

The main bus system 960 may include one or more data, address, power and/or control buses coupled to the various components of the system 900. The system 900 also may include additional bus systems such as bus system 962, which communicatively couples the cache memory 904 and the processing core 902, bus system 964, which communicatively couples the cache memory 904 and the primary memory 906, bus system 966, which communicatively couples the primary memory 906 and the processing core 902, and bus system 968, which communicatively couples the primary memory 906 and the secondary memory 908.

The primary memory or memories 906 are typically the working memory of the system 900 (*e.g.,* the memory or memories upon which the processing cores 902 work or upon which co-processors such as the CNN accelerator circuitry 940 work), and may typically be a volatile memory (e.g., DRAM) of a limited size storing code and data related to processes executed by the system 900. For convenience, reference herein to data stored in a memory may also refer to code stored in a memory. Non-volatile memories, such as SRAM, ReRAM, PCM, MRAM, FRAM, multilevel memories, etc., may be employed as or in the primary memory or memories in an embodiment. The secondary memory 908 may typically be a non-volatile memory, which stores instructions and data, which may be retrieved and stored in the primary memory 906 when needed by the system 900. The cache memory 904 may be a relatively fast memory compared to the secondary memory 908 and typically has a limited size, which may be larger than a size of the primary memory 906.

The cache memory 904 temporarily stores code and data for later use by the system 900. Instead of retrieving needed code or data from the secondary memory 908 for storage in the primary memory 906, the system 900 may check the cache memory 904 first to see if the data or code is already stored in the cache memory 904. A cache memory 904 may significantly improve performance of a system, such as the system 900, by reducing the time and other resources needed to retrieve data and code for use by the system 900. When code and data are retrieved (e.g., from the secondary memory 908) for use by the system 900, or when data or code are written (e.g., to the primary memory 906 or to the secondary memory 908), a copy of the data or code may be stored in the cache memory 904 for later use by the system 900. Various cache management routines may be employed to control the data stored in the cache memory or memories 904.

In some embodiments, a CNN network includes convolution circuitry configured to generate a plurality of convolution values by performing a convolution operation on a plurality of quantized input values. The CNN includes first requantization circuitry coupled to the convolution circuitry and configured to generate a plurality of first quantized output values in a first quantization format by performing a first quantization process on the convolution values.

In some embodiments, a method includes receiving, at a first layer of a neural network, an input tensor including a plurality of quantized input data values and generating intermediate data values from the input tensor values by performing a first operation on the quantized data values. The method includes generating, at the first layer, a first output tensor including a plurality of first quantized output data values. The generating includes by performing a first requantization process on the intermediate data values.

In some embodiments, an electronic device includes a neural network. The neural network includes a stream link configured to provide tensor data including a plurality of quantized input data values and a hardware accelerator configured to receive the tensor data and to generate intermediate data values by performing an operation on the quantized input data values. The neural network includes requantization circuitry configured to generate a plurality of quantized output data values by performing a requantization operation on the intermediate data values.

In some embodiments, a non-transitory computer-readable medium having contents which configure a hardware accelerator of convolutional neural network to perform a method. The method includes receiving an input tensor including a plurality of quantized input data values, and generating intermediate data values from the input tensor values by performing a first operation on the quantized data values. The method includes generating a first output tensor including a plurality of first quantized output data values. The generating includes performing a first requantization process on the intermediate data values.

Some embodiments may take the form of or comprise computer program products. For example, according to one embodiment there is provided a computer readable medium comprising a computer program adapted to perform one or more of the methods or functions described above. The medium may be a physical storage medium, such as for example a Read Only Memory (ROM) chip, or a disk such as a Digital Versatile Disk (DVD-ROM), Compact Disk (CD-ROM), a hard disk, a memory, a network, or a portable media article to be read by an appropriate drive or via an appropriate connection, including as encoded in one or more barcodes or other related codes stored on one or more such computer-readable mediums and being readable by an appropriate reader device.

Furthermore, in some embodiments, some or all of the methods and/or functionality may be implemented or provided in other manners, such as at least partially in firmware and/or hardware, including, but not limited to, one or more application-specific integrated circuits (ASICs), digital signal processors, discrete circuitry, logic gates, standard integrated circuits, controllers (e.g., by executing appropriate instructions, and including microcontrollers and/or embedded controllers), field-programmable gate arrays (FPGAs), complex programmable logic devices (CPLDs), etc., as well as devices that employ RFID technology, and various combinations thereof.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1.   A convolutional neural network, CNN (101) comprising:

   convolution circuitry (106) configured to generate a plurality of convolution values by performing a convolution operation on a plurality of quantized input values (102) in an input quantization format; and
   first requantization circuitry (112) coupled to the convolution circuitry (106) and configured to generate a plurality of first quantized output values in a first output quantization format by performing a first quantization process on the convolution values.

2.   The CNN (101) of claim 1, further comprising second requantization circuitry (112) coupled to the convolution circuitry (106) and configured to generate a plurality of second quantized output values in a second output quantization format by performing a second quantization process on the convolution values.

3.   The CNN (101) of claim 2, wherein the first output quantization format is a scale/offset quantization format and the second output quantization format is a fixed point quantization format.

4.   The CNN (101) of claim 1:

wherein the input quantization format is a scale/offset format and the first output quantization format is the scale/offset quantization format; or
wherein the input quantization format is a scale/offset format and the first output quantization format is a fixed point quantization format; or
wherein the input quantization format is a fixed point quantization format and the first output quantization format is a scale/offset quantization format; orwherein the input quantization format is a fixed point quantization format and the first output quantization format is the fixed point quantization format.

5. The CNN (101) of claim 1, further comprising:

   a stream link (130) configured to receive the quantized input values; and
   a subtractor (132) positioned between the stream link (130) and the convolution circuitry (106) and configured to perform a subtraction operation on the quantized input values prior to the convolution operation,
   the CNN preferably further comprising a shifter (134) coupled between the subtractor (132) and the convolution circuitry (106) and configured to adjust a number of bits of the quantized input values prior to the convolution operation.

6. The CNN (101) of claim 1:

   further comprising pooling circuitry (110) configured to generate a plurality of pooling values by performing a pooling operation on a plurality of second quantized input values; and
   second requantization circuitry coupled to the pooling circuitry (110) and configured to generate a plurality of second quantized output values by performing a second quantization process on the pooling values;
   and/or further comprising activation circuitry (108) configured to generate a plurality of activation values by performing an activation operation on a plurality of second quantized input values; and
   second requantization circuitry coupled to the activation circuitry (108) and configured to generate a plurality of second quantized output values by performing a second quantization process on the activation values.

7. A method, comprising:

   receiving, at a first layer of a neural network (101), an input tensor including a plurality of quantized input data values;
   generating intermediate data values from the input tensor values by performing a first operation on the quantized data values; and
   generating, at the first layer, a first output tensor including a plurality of first quantized output data values, the generating including by performing a first requantization process on the intermediate data values.

8. The method of claim 7:

   wherein the first operation is a convolution operation, or
   wherein the first operation is a pooling operation, or
   wherein the first operation is an activation operation.

9. The method of claim 7, comprising generating, at the first layer, a second output tensor including a plurality of second quantized output data values by performing a second requantization process on the intermediate data values.

10. The method of claim 9, wherein the first quantized output data values are in a first quantization format and the second quantized output data values are in a second quantization format.

11. The method of claim 10, wherein the first quantization format is a scale/offset format and/or wherein the second quantization format is a fixed point format.

12. An electronic device (100), comprising a neural network (101), the neural network including:

   a stream link (130) configured to provide tensor data including a plurality of quantized input data values;
   a hardware accelerator configured to receive the tensor data and to generate intermediate data values by performing an operation on the quantized input data values; and
   requantization circuitry (112) configured to generate a plurality of quantized output data values by performing a requantization operation on the intermediate data values.

13. The electronic device of claim 12:

   wherein the hardware accelerator is a convolution accelerator, or
   wherein the hardware accelerator is a pooling accelerator, or
   wherein the hardware accelerator is an activation accelerator.

14. The electronic device of claim 12, wherein the requantization circuitry (112) includes arithmetic circuitry.

15. A non-transitory computer-readable medium having contents which configure a hardware accelerator of convolutional neural network (101) to perform a method, the method comprising:

   receiving an input tensor including a plurality of quantized input data values;
   generating intermediate data values from the input tensor values by performing a first operation on the quantized data values; and
   generating a first output tensor including a plurality of first quantized output data values, the generating including performing a first requantization process on the intermediate data values

16. The non-transitory computer-readable medium of claim 15:

   wherein the hardware accelerator is a convolution accelerator; and/or
   wherein the first operation is selected out of a convolution operation, a pooling operation and an activation operation; and/or
   wherein the method comprises generating, at a first layer, a second output tensor including a plurality of second quantized output data values by performing a second requantization process on the intermediate data values.

**FIG. 1**

**FIG. 2**

*300*

*302*

HEIGHT

WIDTH

DEPTH

FIG. 3

*400*

$X_{fmin}$  0  $X_{fmax}$  $X_f$

FIG. 4A

FIG. 4B

FIG. 4C

EP 4 336 409 A1

STREAM LINK *130* → $X_{qi}$ → SUBTRACTOR *132* → SHIFTER *134* → CONVOLUTION UNIT *106* → $A_{CC}$ → REQUANTIZER *112* [ $A \circ A_{CC}$ *136* → SHIFTER *138* ] → $X_{qo}$

## FIG. 5A

STREAM LINK *130* → $X_{qi}$ → SUBTRACTOR *132* → SHIFTER *134* → CONVOLUTION UNIT *106* → $A_{CC}$ → REQUANTIZER *112* [ $A \circ A_{CC} + B$ *136* → SHIFTER *138* ] → $X_{qo}$

## FIG. 5B

FIG. 5C

| 130 | | 132 | | 134 | | 110 | | 140 | |
|---|---|---|---|---|---|---|---|---|---|
| STREAM LINK | $X_{qi}$ | SUBTRACTOR | → | SHIFTER | → | POOLING UNIT | → | ADDER | → $X_{qo}$ |

**FIG. 6**

| 130 | | 132 | | 134 | | 108 | |
|---|---|---|---|---|---|---|---|
| STREAM LINK | $X_{qi}$ | SUBTRACTOR | → | SHIFTER | → | ACTIVATION UNIT | → $X_{qo}$ |

A'  B'  C'
REQUANTIZER

**FIG. 7**

800

802

804

806

FIG. 8

FIG. 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/249085 A1 (HUAWEI TECH CO LTD [CN]) 17 December 2020 (2020-12-17)<br>* figure 1 *<br>* paragraph [0047] *<br>* paragraph [0067] *<br>* paragraph [0082] – paragraph [0108] *<br>* paragraph [0123] *<br>───── | 1-16 | INV.<br>G06N3/0464<br><br>ADD.<br>G06N3/063 |
| | | | TECHNICAL FIELDS SEARCHED (IPC) |
| | | | G06N |

The present search report has been drawn up for all claims

| Place of search | Date of completion of the search | Examiner |
|---|---|---|
| Munich | 10 February 2023 | Maghroum, Walid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 5142

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2023

| Patent document cited in search report | Publication date | Patent family member(s) | Publication date |
|---|---|---|---|
| WO 2020249085 A1 | 17-12-2020 | CN 112085175 A | 15-12-2020 |
| | | WO 2020249085 A1 | 17-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190266479
- US 20190266485
- US 20190266784